# EUROPEAN PATENT APPLICATION

(11) **EP 2 772 959 A2**
(43) Date of publication of application: **03.09.2014**
(21) Application number: 13182768.5
(22) Date of filing: 03.09.2013
(51) Int. Cl.: H01M 2/10

(54) **Pack case for battery**

(30) Priority: 28.02.2013 US 201361770874 P; 23.07.2013 US 201313949167
(71) Applicant: Samsung SDI Co., Ltd., Gyeonggi-do 449-577 (KR)
(72) Inventor: Lee, Jaewook, Yongin-si, Gyeonggi-do (KR); Lee, Yonho, Yongin-si, Gyeonggi-do (KR); Kim, Yongwoo, Yongin-si, Gyeonggi-do (KR); Lee, Sukhwan, Yongin-si, Gyeonggi-do (KR)
(74) Representative: Gulde & Partner

(57) **Abstract**

The invention relates to a pack case (100) for a battery. In order to be able to provide a pack case (100) with a simplified structure, the invention provides that the pack case (100) includes a first case (110) and a second case (120) to accommodate a plurality of battery cells therein, wherein the first case (110) includes a first coupling member (113) with a latch element (Z), and the second case (120) includes a second coupling element (126) with a counter latch device (Z') and a guide member (X) for the first coupling member (113).

## Description

### FIELD OF INVENTION

The invention relates to a pack case for a battery, which has a simplified structure by increasing an internal coupling force and can increase a life span of a mold.

### DESCRIPTION OF THE RELATED ART

Unlike a primary battery that is incapable of being recharged, a rechargeable battery is a battery that can be repeatedly charged and discharged. A low-capacity rechargeable battery having a single cell is used in small portable electronic apparatuses, such as mobile phones, laptop computers, and camcorders. A large-capacity rechargeable battery that includes a plurality of rechargeable cells connected in a pack shape is used as a power source for driving a motor of a hybrid electric vehicle and the like.

Rechargeable batteries are manufactured in various shapes, for example a cylindrical shape and a prismatic shape.

Rechargeable batteries are generally configured by housing an electrode assembly including a positive electrode, a negative electrode and a separator positioned between the positive and negative electrodes as an insulator in a case, together with an electrolyte, and sealing the case with a cap assembly. Positive and negative electrode terminals are connected to the electrode assembly and are exposed to or protrude to the outside through the cap plate.

A plurality of rechargeable batteries are provided and inserted into a pack case according to the application field of batteries and then connected to each other in series/parallel. Thus, since there chargeable batteries are finally used in the form of a pack case, the pack case needs to have a secured structure.

### SUMMARY

It is an object of the invention to provide a pack case for a battery, which has a simplified structure by increasing an internal coupling force which increases the life span of a mold.

The object is achieved according to the invention for a pack case in that the pack case comprises: a first case comprising a first coupling member comprising a latch element; and a second case comprising a second coupling element comprising a guide elements and a counter latch element, the first coupling member being configured to move along the guide elements of the second coupling element and to engage the latch element of the first coupling member with the counter latch element of the second coupling element, and the first case and the second case being configured to accommodate one or more battery cells therebetween.

In addition, the latch element may be a latch opening, e.g. a link hole with a square (□) shape or a 'U' shape.

In addition, the second coupling element may have a slanting surface at an upper side of the locking leg.

Further, the guide member may comprise a guide groove passing through the guide member and the guide member is L-shaped.

Further, the first coupling member may be configured to be inserted into and guided along the guide groove to engage the link hole of the first coupling member with the locking leg of the second coupling element.

Further, the first coupling member may be fixed at the locking leg of the second coupling element and at the guide groove of the guide member.

Further, the second coupling element may comprise a pair of guide members and the locking leg may be between the pair of guide members.

Further, a bottom area of the first coupling member may span between the pair of guide members to contact the pair of guide members.

Further, a bottom portion of the locking leg of the second coupling element may be perpendicular to a surface of the second case at which the locking leg is located.

Further, the slanting surface of the second coupling element may be configured to apply a force to the first coupling member when the first coupling member is coupled to the second coupling element. Further, the force may be applied to a center of the first coupling member, and the force may cause the first coupling member to resiliently deform.

Further, the first coupling member may comprise two link holes.

Further, the two link holes may be separated by a separation component at a center of the first coupling member, and/or the two link holes may be arranged in a straight line along a length direction of the first coupling member.

Further, the second coupling element may further comprise another locking leg, wherein the locking leg and the other locking leg may be arranged in a straight line along a length direction of the second coupling element. In accordance with another embodiment of the present invention, there is provided a pack case for a battery, the pack case including a first case and a second case to accommodate a plurality of battery cells therein, wherein the first case includes first coupling member having a slanting surface and a locking leg formed at its edge, and a second coupling element having a guide member, a slanting surface and a locking leg formed at its edge, so that the first case moves along the guide member through the first coupling member and the second coupling member, and the locking leg of the first coupling member is engaged with the locking leg of the second coupling member.

Further, the slanting surface of the second coupling element may be configured to apply a force to the slanting surface of the first coupling member to resiliently deform the first coupling member when the first coupling member and the second coupling element are being coupled together.

In the pack case according to the present invention, the first coupling member having the link hole is formed at an edge of the first case, and the second coupling element having the guide member and the locking leg is formed at an edge of the second case combined with the first case. Thus, the first coupling member moves along the guide member of the second coupling member, and the link hole of the first coupling member is engaged with the locking leg of the second coupling member, thereby increasing the coupling force of the pack case and establishing secured engagement.

Further, the same effect could be achieved according to another embodiment of the present invention. In the present invention, the first coupling member has a slanting surface and a locking leg is formed at its edge, and a second coupling element has a guide member, a slanting surface and a locking leg are formed at its edge, so that the first case moves along the guide member through the first coupling member and the second coupling member, and the locking leg of the first coupling member is engaged with the locking leg of the second coupling member. Through this constitution, the coupling force of the pack case is increased secured engagement is secured.

In addition, since the number of coupling members, such as hooks, required for engagement is reduced, compared to the prior art, the pack case may have a simplified structure, and a mold for the manufacture of the pack case is simplified, thereby increasing the life span of the mold.

### BRIEF DESCRIPTION OF THE DRAWINGS

Fig.1 is a perspective view of a pack case according to an embodiment of the present invention;
Fig. 2 is an exploded perspective view of the pack case shown in Fig. 1;
Fig. 3 is a transmittance perspective view of a first case in the pack case shown in Fig. 1;
Fig. 4 is a perspective view of a second case in the pack case shown in Fig. 1;
Fig. 5a is an enlarged view illustrating a first coupling member provided in the pack case shown in Fig. 1;
Fig. 5b is an enlarged view illustrating a second coupling element provided in the pack case shown in Fig. 1;
Figs.5c and 5d are enlarged views illustrating a procedure in which the first coupling member and the second coupling element are coupled to each other in the pack case shown in Fig. 1;
Fig. 6a is an enlarged view illustrating a first coupling member provided in a pack case according to another embodiment of the present invention;
Fig. 6b is an enlarged view illustrating a procedure in which the first coupling member and a second coupling element are coupled to each other in the pack case shown in Fig. 6a;
Fig. 7a is an enlarged view illustrating a first coupling member provided in a pack case according to still another embodiment of the present invention;
Fig. 7b is an enlarged view illustrating a procedure in which the first coupling member and a second coupling element are coupled to each other in the pack case shown in Fig. 7a;
Fig. 8a is an enlarged view illustrating a first coupling member provided in a pack case according to still another embodiment of the present invention;
Fig. 8b is an enlarged view illustrating a second coupling element provided in a pack case according to still another embodiment of the present invention;
Fig. 8c is an enlarged view illustrating a procedure in which the first coupling member and the second coupling element are coupled to each other in the pack case shown in Fig. 8a;
Fig. 9a is an enlarged view illustrating a first coupling member provided in a pack case according to still another embodiment of the present invention;
Fig. 9b is an enlarged view illustrating a second coupling element provided in a pack case according to still another embodiment of the present invention;
Fig. 9c is an enlarged view illustrating a procedure in which the first coupling member and the second coupling element are coupled to each other in the pack case shown in Fig. 9a.

### DETAILED DESCRIPTION

Example embodiments of the present invention will now be described in more detail with reference to accompanying drawings, such that those skilled in the art can easily practice the present invention.

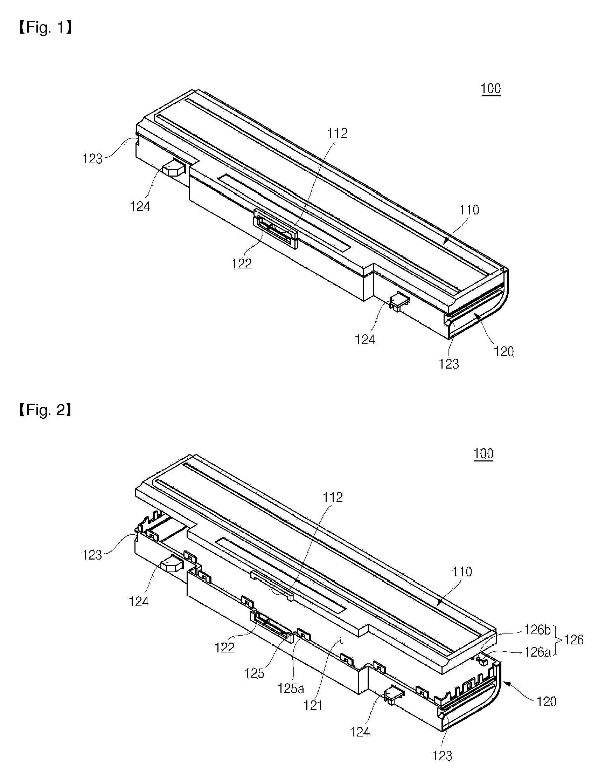

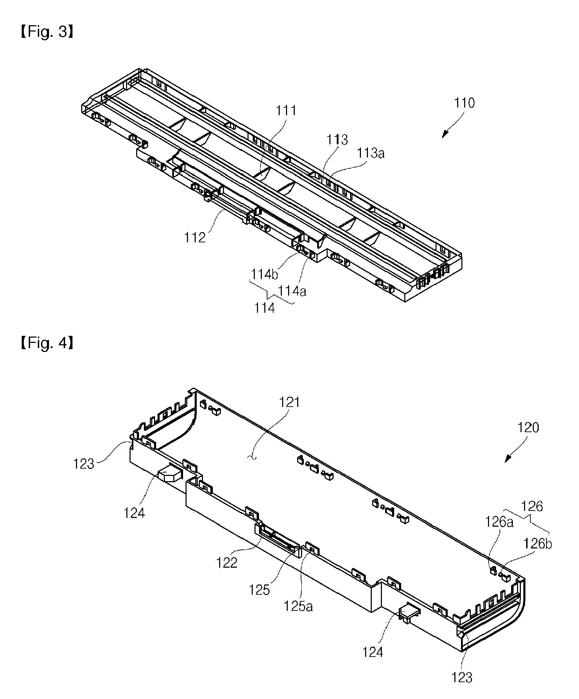

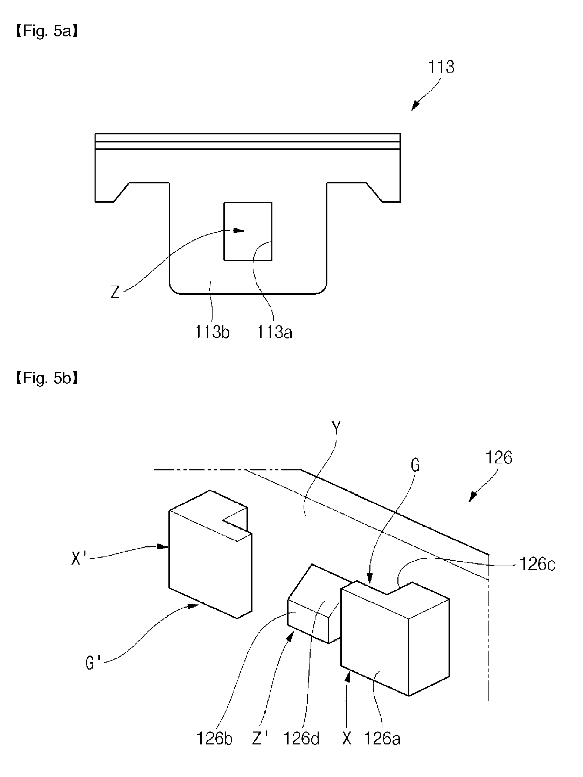

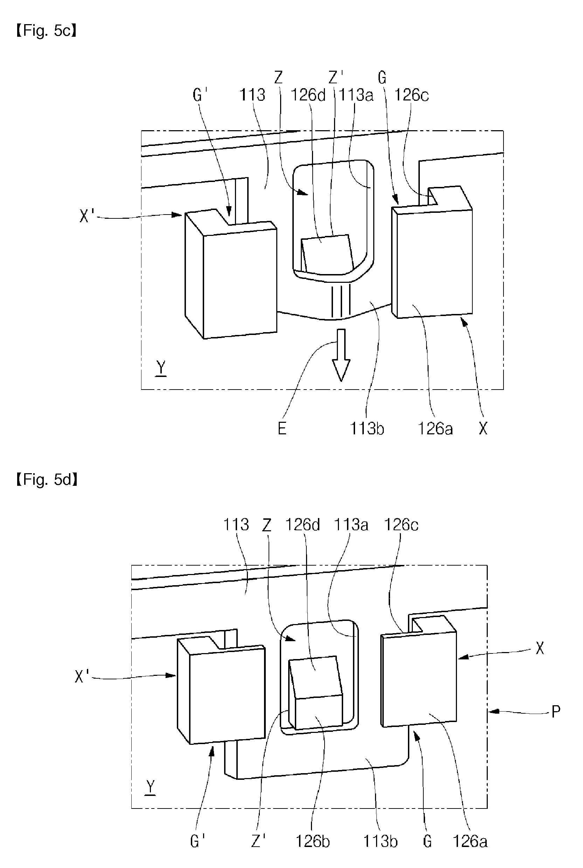

Fig.1 is a perspective view of a pack case according to an embodiment of the present invention, Fig. 2 is an exploded perspective view of the pack case shown in Fig. 1, Fig. 3 is a transmittance perspective view of a first case in the pack case shown in Fig. 1, Fig. 4 is a perspective view of a second case in the pack case shown in Fig. 1, Fig. 5a is an enlarged view illustrating a first coupling member provided in the pack case shown in Fig. 1, Fig. 5b is an enlarged view illustrating a second coupling element provided in the pack case shown in Fig. 1, and Figs.5c and 5d are enlarged views illustrating a procedure in which the first coupling member and the second coupling element are coupled to each other in the pack case shown in Fig. 1.

Referring to Figs. 1 to 5d, the pack case 100 according to an embodiment of the present invention includes a first case 110 and a second case 120. The pack case 100 for the battery may be a housing of the battery. As the first case 110 and the second case 120 are parts of the pack case 100, they may be designated as a first shell and a second shell of the pack case 100.

The first case 110 may be coupled to an upper side of the second case 120. The first case 110 may be made of a plastic material that is an electric insulator.

The first case 110 is shown with barrier walls 111 provided therein to downwardly fix one or more battery cells accommodated in the pack case 100. In addition, the first case 110 has a connection part 112 to be connected to an external device, the connection part 112 formed on the inner surface perpendicular to a direction in which the pack case 100 is attached to/detached from the external device. A terminal of the external device is connected to the first case 110 through the connection part 112, thereby charging the battery cells positioned within the pack case 100 or receiving power from the battery cells.

Referring to Fig. 5a, the first case 110 includes a first coupling member 113 formed at one or more portions of its edge. The first coupling member 113 may be formed as a latch device comprising a latch element Z, e.g. a latch protrusion. The first coupling member 113 is, however, depicted shaped with a loop extending protruding away and for instance downwardly from an edge of the first case 110. Due to the loop shape, the latch element Z forms latch opening. The first coupling member 113 comprises a holding bar 113b, which abuts a bottom area of the latch opening. The holding bar 113b may be used to secure a latch connection between the coupling member 113 and a counter coupling member. A base bar 113a connects the holding bar 113b to the edge of the first case 110. In the depicted exemplary embodiment, the holding bar 113b is connected to the edge by two base bars 113a, which are arranged at opposite ends of the holding bar 113b. The base bars 113a and the holding bar 113a surround the latch opening, which has a substantially square ('□') shape. The latch opening may be designated as a link hole. Therefore, the second case 120 engaged with the latch element Z is securely fixed by the holding bar 113b.

In addition, the first case 110 may include a second coupling member 114 formed at one or more portions of its edge. Again, the second coupling member 114 may be designated as a latch device, too. However, the shape of the second coupling member 114 may differ from that of the first coupling member 113. The second coupling member 114 is formed at an area other than the area where the first coupling member 113 is formed. A pair of the second coupling members 114 are provided, including a guide member 114a formed in a substantially 'L' shape, and a locking leg 114b formed between the guide members 114a. As will later be described, the second coupling member 114 is engaged with a loop-shaped first coupling element 125 formed in the second case 120. The first coupling element 125 may be formed as the first coupling member 113. In this case, the guide member 114a guides an engaged direction of the first coupling element 125 of the second case 120, and the locking leg 114b is coupled and fixed to the first coupling element 125 of the second case 120. The second coupling member 114 may have the same configuration as a second coupling element 126 of the second case 120,which will be described in detail later.

The second case 120 can be combined with the first case 110. The second case 120 is preferably coupled to a lower side of the first case 110. As the first case 110, the second case 120 may also be made of a plastic material that is an electric insulator. The second case 120 has an accommodation space 121 provided therein to accommodate one or more battery cells.

In addition, the second case 120 has a connection part 122 to be connected to an external device, the connection part 122 being formed on the inner surface perpendicular to a direction in which the pack case 100 is attached to/detached from the external device.

Although not separately shown, connection leads are formed at opposite ends of the accommodation space 121, forming charge/discharge paths of the battery cells, and may extend to the connection part 122 of the second case 120. The connection part 122 is matched with the connection part 112 of the first case 110, and the external device is connected to the matched connection parts 112 and 122, thereby charging the battery cells or receiving power from the battery cells.

In addition, the second case 120 has a coupling groove 123 formed along the short side parallel to a direction in which the pack case 100 is attached to/detached from the external device. A protrusion of the external device is coupled to the coupling groove 123, thereby guiding the pack case 100 to be connected to the external device.

In addition, the second case 120 includes an assembling/disassembling protrusion 124 formed on the inner surface perpendicular to a direction in which the pack case 100 is attached to / detached from the external device. The assembling/disassembling protrusion 124 is engaged with the external device, thereby assembling or disassembling the pack case 100 by maintaining a connected state of the pack case 100 when it is connected to the external device or canceling the connected state from the external device.

The second case 120 has a first coupling element 125 formed at a portion of its edge. The first coupling element 125 preferably has the same configuration as the first coupling member 113 of the first case 110 and may therefor be designated as a latch device. The first coupling element 125 has a substantially square ('□') shape with a link hole 125a, e.g. a latch opening, formed therein. The link hole 125a can be engaged with the locking leg 114b formed in the second coupling member 115 of the first case 110.

Referring to Fig.5b, the second case 120 includes a second coupling element 126. A pair of the second coupling elements 126 may be provided, each including a pair of guide members X, X', each formed in a substantially 'L' shape. The guide members X, X' may be designated as holding elements and can comprise a guide element 126a. The guide elements 126a preferably extend along a guide groove G, G', which is arranged between the guide elements 126a and a case or housing wall Y of the second case 120. Between the guide members X, X', the second coupling elements 126 may comprise a latch element Z', e.g. a latch protrusion. Hence, the second coupling element 126 may be designated as a counter latch device, in particular for the coupling member 113. The coupling member 113 and the second coupling element 126 are preferably adapted to create a latch connection with each other in an assembled state of the pack case 100, securing the first case 110 and the second case 120 against movements relative to each other.

Each guide member X, X' includes a guide groove G, G' provided therein. The guide groove G, G' is formed to vertically pass through the guide member X, X'. The first coupling member 113 of the first case 110 may be inserted into and guided along the guide grooves G, G' of the guide elements 126a, and may move through the guide groove G, G' to be coupled to the second coupling element 126. Each of the guide members X, X', may comprise a holding bar 126c, that interconnects one of the guide elements 126a and the housing wall Y. The holding bar 126c are arranged at opposite ends of the guide grooves G, G' with the latch element Z' therebetween.

The latch element Z' protrudes between the pair of guide members X, X'. While a bottom portion of the latch element Z' is perpendicular to the housing wall Y of the second case 120, a top portion of the latch element Z' is tilted with respect to the second case 120 to have a slanting surface 126d. A plateau portion 126b of the latch element Z' essentially extends parallel to the housing wall Y.

Referring to Fig. 5c, the slanting surface 126d may guide the holding bar 113b of the first coupling member 113 to be bent when the first coupling member 113 of the first case 110 descends in an engage direction E. Accordingly, the first coupling member 113 may be easily fixed to the bottom portion of the locking leg 126b.

In addition, referring to Fig.5d, in a state in which coupling of the first case 110 to the second case 120 is completed and the first coupling member 113 is in its latched position P, the holding bar 113b of the first coupling member 113 of the first case 110 is fixed in all directions parallel and perpendicular to the housing wall Y by the latch element Z' and the holding elements X, X' formed by the second coupling element 126 of the second case 120, thereby preventing the first case 110 and the second case 120 from being disassembled from each other. Therefore, the pack case 100 according to the embodiment of the present invention has an improved coupling force, thereby reducing the required number of coupling members, such as hooks for coupling, compared to the conventional pack case. Accordingly, the pack case 100 may have a simplified structure, and a mold for the manufacture of the pack case 100 may also be simplified, thereby increasing the life span of the mold.

In addition, although not in detail described, the first coupling member 113 of the first case 110 may have the same configuration as the first coupling element 125 of the second case 120, and the second coupling member 114 of the first case 110 may have the same configuration as the second coupling element 126 of the second case 120. The first coupling element 125 of the second case 120 can be inserted into the second coupling member 114 of the first case 110 to be coupled to the second coupling member 114 in the same manner as described above.

Hereinafter, a configuration of a pack case according to another embodiment of the present invention is described.

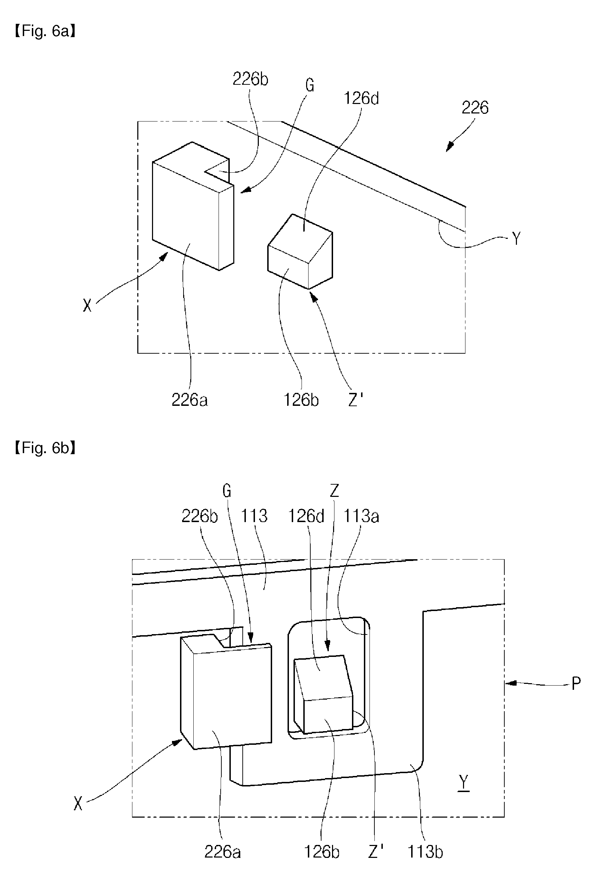

Fig. 6a is an enlarged view illustrating a first coupling member provided in a pack case according to another embodiment of the present invention, and Fig. 6b is an enlarged view illustrating a procedure in which the first coupling member and a second coupling element are coupled to each other in the pack case shown in Fig. 6a. The same functional components and operations as those of the previous embodiment are denoted by the same reference numerals, and only differences between the present and previous embodiments will be explained.

Referring to Fig.6a, the pack case according to another embodiment of the present invention comprises a second coupling element 226 of a second case. The second coupling element 226 may be designated as a counter latch device, in particular for the first coupling member 133. It can comprise one holding element X, which may be formed with or even consist of a guide element 226a and a holding leg 226b that connects the guide element 226a to the housing wall Y. The guide element 226a and the holding leg 226b form the guide grove G to guide the first coupling member 113 of the first case.

Referring to Fig.6b, after coupling is completed, the first coupling member 113 of the first case 110 is arranged in its latched position P and maintained at a fixed state by a holding element X and a protruding latch element Z'.

Hereinafter, a configuration of a pack case according to still another embodiment of the present invention will be described.

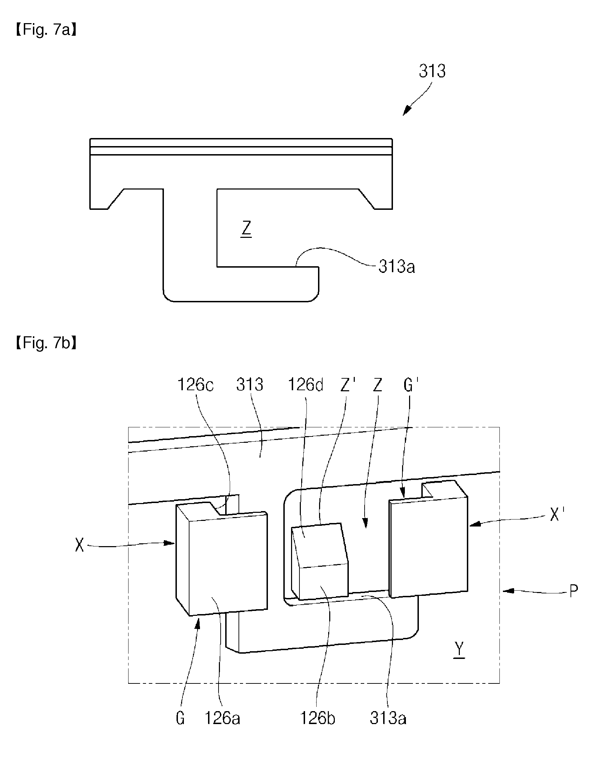

Fig. 7a is an enlarged view illustrating a first coupling member provided in a pack case according to still another embodiment of the present invention, and Fig. 7b is an enlarged view illustrating a stage in which the first coupling member and a second coupling element are coupled to each other in the pack case shown in Fig. 7a.

Referring to Fig.7a, in the pack case according to still another embodiment of the present invention, a first coupling member 313 of a first case includes a latch element Z, e.g. a latch opening having an open side to have a substantially 'U' shape. A holding leg 313a forms one leg of the 'U'. A guide member interconnects the holding leg 313a to an edge of the case.

Referring to Fig.7b, like in the previous embodiment, after coupling is completed, the first coupling member 313 of the first case is arranged in its latched position P and is maintained at a fixed state by a guide element 126a and a latch element Z'. Again, the first coupling member 313 may be designated as a latch device.

Hereinafter, a configuration of a pack case according to still another embodiment of the present invention will be described.

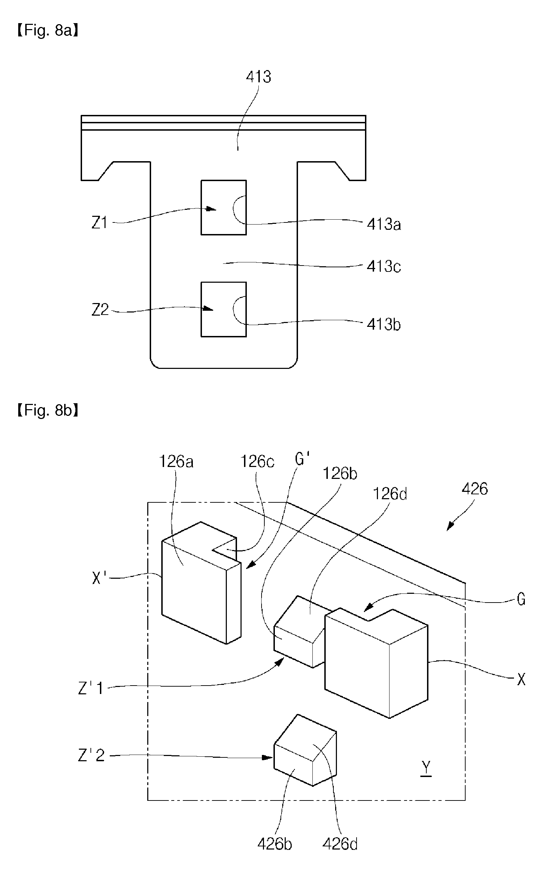

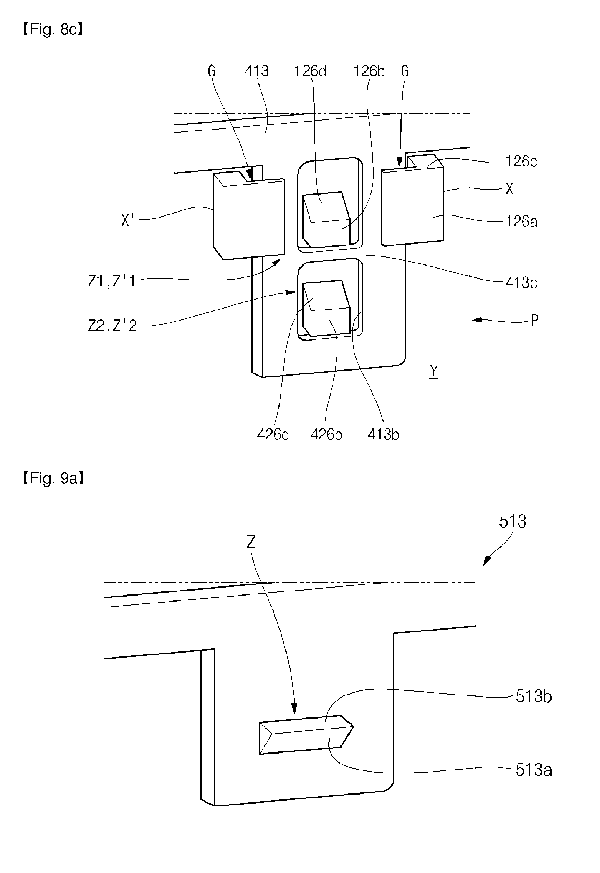

Fig. 8a is an enlarged view illustrating a first coupling member provided in a pack case according to still another embodiment of the present invention, Fig. 8b is an enlarged view illustrating a second coupling member provided in a pack case according to still another embodiment of the present invention, and Fig. 8c is an enlarged view illustrating a procedure in which the first coupling member and the second coupling element are coupled to each other in the pack case shown in Fig. 8a.

Referring to Fig.8a, in the pack case according to still another embodiment of the present invention, a first coupling member 413 of a first case includes two latch elements Z1, Z2, e.g. latch openings provided therein, and has a separation part 413c formed at its center. The separation part 413c may be used for interacting with a counter latch element, e.g. a latch protrusion arranged in one of the latch openings Z1, Z2. Therefore, the separation part 413c may be designated as a holding bar. The latch openings Z1, Z are arranged to form a straight line in a vertical direction, which preferably extends perpendicular to the edge of the first case. A guiding member 413a may interconnect the separation part 413c to the edge and a guiding member 413 b may interconnect the separation part 413c to another separation part, which may form a longitudinal free end of the first coupling member 413 and my be designated as a holding bar, too.

In addition, referring to Fig.8b, a second coupling element 426 of a second case is shown. The second coupling element 426 may be adapted to be a counter latch device, in particular for the first coupling member. The second coupling element 426 includes two counter latch elements Z'1, Z'2 so as to correspond to the latch elements Z1, Z2 of the first coupling member 413. The counter latch elements Z'1, Z'2 are arranged to form a straight line in a vertical direction and may both be formed as latch protrusions.

Therefore, as shown in Fig. 8c, if coupling of the first and the second case is completed along the guide grooves G, G' of the second coupling element 426, the latch elements Z1, Z2 formed by first coupling member 413 of the first case are coupled to the counter latch elements Z'1, Z'2, respectively. Therefore, the first coupling member 413 of the first case is fixed by the second coupling element 426 of the second case.

Hereinafter, a configuration of a pack case according to still another embodiment of the present invention will be described.

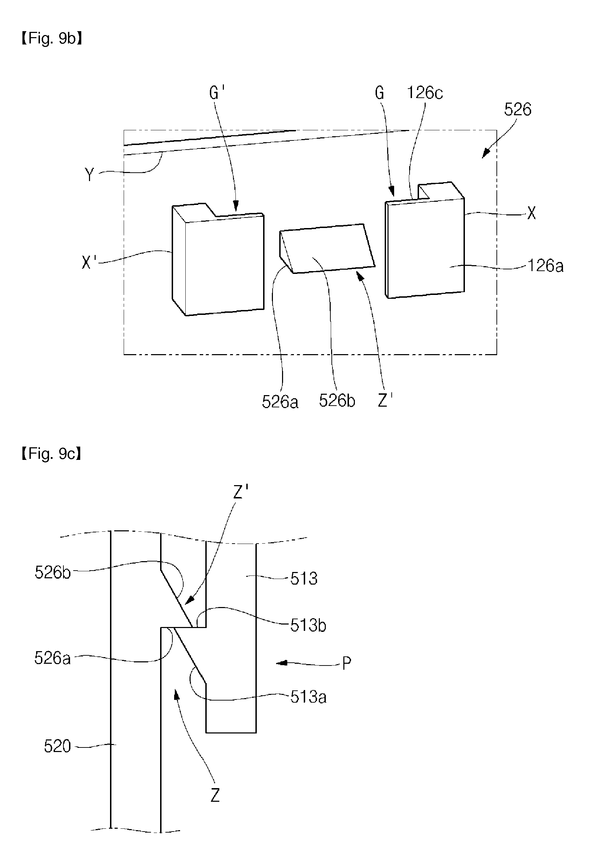

Fig. 9a is an enlarged view illustrating a first coupling member of a pack case according to still another embodiment of the present invention, Fig. 9b is an enlarged view illustrating a second coupling element of a pack case according to still another embodiment of the present invention, and Fig. 9c is an enlarged view illustrating a state in which the first coupling member and the second coupling element are coupled to each other .

Referring to Fig.9a, in the pack case according to still another embodiment of the present invention, a bottom portion of a latch element Z of a first coupling member 513 of a first case has a slanting surface 513a, and a locking side 513b formed at a top portion of the latch element Z, the locking side 513b facing away from a free end of the coupling member 513. Hence, the latch element Z may be a latch protrusion, which may protrude towards or away from a housing wall of the first case. Again, the first coupling member 513 may be designated as latch device.

In addition, referring to Fig.9b, a second coupling element 526 of a second case includes a latch element Z' with a slanting surface 526b between a pair of holding elements X, X' so as to correspond in position to the first coupling member 413. The latch element Z' is formed with a locking side 526a, e.g. at a bottom portion of the latch element Z'., The slanting surface 526b is preferably formed at a top portion of the latch element Z' .

Referring to Fig.9c, the slanting surface 513a of the first coupling member 513 of the first case can be moved downward, e.g. while deforming the slanting surface 526b of the second coupling member 526 of the second case. In addition, after the moving is completed, the latch element Z of the first coupling member 513 is engaged with the latch element Z' of the second coupling element 526, thereby fixing final positions of the first coupling member 513 and the second coupling element 526. In addition, in the engaged state, the locking sides 513b and 526b are in contact with each other, and sides of the first coupling member 513 and the second coupling element 526 are fixed by the guide element 126a. Therefore, the first coupling member 513 of the first case can be combined with the second coupling element 526 of the second case in a secured manner in its latched position P. Thus, the second coupling element 526 may be designated as a counter latch device, in particular for the first coupling member 513.

It is clear for a person skilled in the art that the disclosed embodiments can also be combined, where possible.

In other words, according to a possible embodiment of the invention, a battery housing 100 for receiving at least one battery cell, may be provided, the battery housing 100 comprising a first shell 110 and a second shell 120, the first shell 110 comprising a latch device 113 and the second shell 120 comprises a counter latch device 126, the latch devices 113, 126 being adapted to create a latch connection in an assembled state of the battery housing 100, thereby securing the first shell 110 against movements relative to the second shell 120 and against an engage direction E, whereby the counter latch device 126 comprises a holding element X, wherein, in the assembled state, the latch device 113 is preferably at least sectionwise arranged between a housing wall Y of the second shell 120 and the holding element X.

According to a further possible embodiment, in an incomplete assembly state of the battery housing 100, in which the latch device 113 is arranged before its latched position P in the engage direction E, the latch device 113 may be elastically deformed by the counter latch device 126, wherein a latch element Z, Z' of on one of the latch devices 113, 126 may press the latch device 113 against the holding element X.

According to another possible embodiment, the holding element X may encompass a guide groove G at least partially, the guide groove G opening towards the latch element Z' of the counter latch device 126 and in and against the engage direction E.

According to a further possible embodiment, the holding element X may essentially be L-shaped and be formed with a holding bar 126c that extends in and perpendicular to the engage direction E, and with a guide element 126a that protrudes from a free end of and perpendicular to the holding bar 126c.

According to another possible embodiment, the counter latch device 126 may be formed with two holding elements X, X', which each form one guide groove G, G', the guide grooves G, G' opening towards each other.

According to a further possible embodiment, the latch element Z' of the counter latch device 126 may be arranged between the two holding elements X, X'.

According to another possible embodiment, the latch device 113 can comprise a holding bar 113b that extends perpendicular to the engage direction E and is arranged behind the latch element Z of the latch device 113 in the engage direction E.

According to a further possible embodiment, the holding bar 113b may be elastically deformable by the counter latch device 126 during assembly of the battery housing 100.

According to another possible embodiment, a distance perpendicular to the housing wall Y and between the housing wall Y and the guide element 126a is preferably less than a thickness of the latch device 113, or between the latch element Z' of the counter latch device 126 and the guide element 126a is preferably less than a thickness of the holding bar 113b or of a thickness of the latch element Z' of the counter latch device 126 added to the thickness of the latch device 113.

According to a further possible embodiment, the latch device 113 can comprise a base bar 113a that is attached to a longitudinal end of the holding bar 113b, the base bar 113a extending along the engage direction E, wherein the base bar 113a is adapted to be guided in the guide grove G during assembly of the battery housing 100.

According to another possible embodiment, the latch device 113 may comprise two base bars 113a, the holding bar 113b being arranged between and affixed to the base bars 113a.

According to a further possible embodiment, respective latch elements Z, Z' of the latch device 113 and the counter latch device 126 are preferably formed essentially complementary to each other or are formed as latch protrusions.

According to another possible embodiment, the latch devices 413, 426 may each comprise two latch elements Z1, Z2, Z'1, Z'2, wherein the latch elements Z1, Z2, Z'1, Z'2 of each of the latch devices 413, 426 are arranged one behind the other in the engage direction E.

According to a further possible embodiment, between its two latch elements Z1, Z2, the latch device 413 can comprise a second holding bar 413c.

According to another possible embodiment, the first shell 110 and the second shell 120 can each comprise at least one latch device 113 and at least one counter latch device 126.

## Claims

1. A pack case for a battery, the pack case comprising: a first case (110) comprising a first coupling member (113) comprising a latch element (Z); and a second case (120) comprising a second coupling element (126) comprising a guide elements (126a) and a counter latch element (Z'), the first coupling member (113) being configured to move along the guide elements (126a) of the second coupling element (126) and to engage the latch element (Z) of the first coupling member (113) with the counter latch element (Z') of the second coupling element (126), and the first case (110) and the second case (120) being configured to accommodate one or more battery cells therebetween.

2. The pack case of claim 1, wherein a bottom area of the first coupling member (113) is closed.

3. The pack case of claim 1 or 2, wherein the latch element (Z) of the first coupling member (113) comprises an opening at one of its sides and is U-shaped.

4. The pack case of one of claims 1 to 3, wherein the guide element (126a) abuts a guide groove (G) passing through the guide member (X) and the guide element (126a) is L-shaped.

5. The pack case of claim 4, wherein the first coupling member (113) is configured to be inserted into and guided along the guide groove (G) to engage the latch element (Z) of the first coupling member (113) with the counter latch element (Z') of the second coupling element (126).

6. The pack case of claim 4 or 5, wherein the first coupling member (113) is fixed at the counter latch element (Z') of the second coupling element (126) and in the guide groove (G) of the guide member (X).

7. The pack case of one of claims 1 to 6, wherein the second coupling element (126) comprises a pair of base bars (126a) and the locking leg (126b) is between the pair of base bars (126a).

8. The pack case of claim 7, wherein a bottom area of the first coupling member (113) spans between the pair of base bars (126a) and is in contact with the pair of base bars (126a).

9. The pack case of one of claims 1 to 8, wherein a bottom portion of the counter latch element (Z') of the second coupling element (126) protrudes perpendicular to a surface of the second case (120) at which the counter latch element (Z') is located.

10. The pack case of any of claims 1 to 9, wherein the second coupling element (126) further comprises a slanting surface (126d) at an upper side of the counter latch element (Z').

11. The pack case of claim 10, wherein the slanting surface (126d) of the second coupling element (126) is configured to apply a force to the first coupling member (113) when the first coupling member (113) is being coupled to the second coupling element (126).

12. The pack case of any of claims 1 to 11, wherein the first coupling member (413) comprises two counter latch elements (Z'1, Z'2), the two counter latch elements (Z'1, Z'2) being separated by a separation part (413c) at a center of the first coupling member (413).

13. The pack case of claim 13, wherein the two counter latch elements (Z'1, Z'2) are arranged in a straight line along a length direction of the first coupling member (113).

14. The pack case of one of claims 1, 12, and 13, wherein the second coupling element (426) further comprises two counter latch elements (Z'1, Z'2), which are arranged in a straight line along a length direction of the second coupling element (426).

15. The pack case of any of claims 1 to 14, wherein
the first coupling member (513) comprises a slanting surface (513a) and a locking side (513b); and the second coupling element (526) comprising the guide element (126a) and a slanting surface (526b) and a locking side (526a), the first coupling member (513) being configured to move along the guide element (126a) of the second coupling element (526) and to engage the locking side (513b) of the first coupling member (513) with the locking side (526a) of the second coupling element (526).
